(19)

Europäisches
Patentamt
European
Patent Office
Office européen
des brevets

(11) **EP 3 322 061 A1**

(12) **EUROPEAN PATENT APPLICATION**

(43) Date of publication:
**16.05.2018 Bulletin 2018/20**

(51) Int Cl.:
***H02J 3/24*** (2006.01)

(21) Application number: **16198707.8**

(22) Date of filing: **14.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nordex Energy GmbH
22419 Hamburg (DE)**

(72) Inventors:
• **De Rijcke, Simon
  22419 Hamburg (DE)**
• **Bode, Florian
  22339 Hamburg (DE)**

(74) Representative: **Hauck
Patentanwaltspartnerschaft mbB
Postfach 11 31 53
20431 Hamburg (DE)**

(54) **METHOD OF DAMPING ELECTROMECHANICAL OSCILLATIONS ON A POWER SYSTEM**

(57) Method of damping electromechanical oscillations on a power system by injecting reactive power generated by one or more wind energy turbines, wherein a reactive power controller is adapted to determine a reference reactive power value ($Q_{ref}$) depending on an actual system voltage ($U_{meas}$), the method comprising:
- measuring oscillation data associated with the power system,
- filtering the measured oscillation data to remove a steady state offset,
- providing a gain and a phase shift to the filtered oscillation data to compensate
o a gain in the reference reactive power value ($Q_{ref}$)

caused by the reactive power controller in response to electromechanical oscillations, and
o a delay in the reference reactive power value ($Q_{ref}$) caused by the reactive power controller, and to generate corrected oscillation data, and

- determining a reactive power setpoint ($Q_{set}$) to be injected into the power system by the one or more wind energy turbines based on the reference reactive power value ($Q_{ref}$) and the corrected oscillation data, wherein the damping is continuously applied to the oscillation data.

Fig. 1

**EP 3 322 061 A1**

## Description

The present invention pertains to a method of damping electromechanical oscillations on a power system and to a wind energy turbine as well as a wind farm adapted to provide damping of electromechanical oscillations on the power system.

The term power system is used in the meaning of power grid as well as the term system voltage is used as synonym for grid voltage. The terms wind energy turbine and wind farm stand for wind turbine generator (WTG) and wind power plant (WP), respectively.

WO 2013/004252 A2 relates to a method for damping system oscillations. The oscillations may be damped by controlling e.g. wind turbine generators to inject power to the system in anti-phase with the system oscillations. Instead of controlling one or more wind turbine generators to generate the same anti-phase power signal a plurality of wind turbine generators is controlled so that each of them only generates a part of the anti-phase power signal while all of the wind turbine generators in combination generate the entire anti-phase power signal. For damping of the system oscillations always at least two reference signals are determined for two different power generator units.

EP 2 499 714 A2 discloses a wind turbine for controlling power oscillations on a system of a power system. The wind turbine comprises rotor blades for turning by the wind, an electric generator rotatably coupled to the rotor blades, a power converter responsive to an electricity generated by the electric generator, the power converter for converting the generated electricity to a frequency and a voltage suitable for supply to the power system, and a power converter for regulating voltage on the system supplemented by modulating real power for damping the power oscillations. In order to achieve damping of the power oscillations the power converter regulates at least the system voltage based on the real power for damping.

Furthermore, it is disclosed in this document that power oscillation damping for inter-area power oscillations is done by so-called STATCOM devices modulating the voltage at the point of interconnection. It is known that inter-area power occur on transmission systems with long lines and large physical distances between major generation sources. Typically, after a disturbance, groups of generators in a first geographic region swing against another group of generators in a second geographic region separated from the first region by a series of long transmission lines. Naturally, these oscillations are of a very low frequency (typically between 0.1 Hz and 0.7 Hz) and are poorly damped in the absence of supplemental damping.

US 8,618,694 B2 discloses a method for damping oscillations of the electrical power on a power system. A controller is configured to generate a first control signal to cause an inverter of the first wind turbine to modulate the electrical power output by the first wind turbine for damping oscillations of one frequency in electrical power on the power system and to generate a second control signal to control the inverter of the second wind turbine to modulate the electrical power output by the second wind turbine for damping oscillations of a different frequency in the electrical power on the power system.

EP 2 516 164 A2 and US 2016/0141991 A1 refer to sub synchronous resonance (SSR) oscillations in the power system. SSR oscillations occur when the electric power system exchanges energy with the turbine generator at one or more frequencies below the electrical system synchronous frequency. Usually two frequencies have to be considered. Taking a 60 Hz system a supersynchronous frequency may occur at roughly about 70 Hz, while the SSR frequency is at about 10 Hz. Usually the supersynchronous frequency is damped by mechanical system components while the subsynchronous frequency at about 10 Hz requires additional damping.

EP 2 594 004 B1 refers to inter-area oscillations which typically occur in large interconnected power systems with two or more areas interconnected through relatively weak alternating current (AC) transmission lines. If a power oscillation between two areas of a power system is excited the rotor angles of synchronous machines in one area will start to oscillate in counter phase with synchronous machines in the other area and thereby force a flow of active power back and forth between the areas. In order to damp power oscillations in the electricity network a device controller changes the rotational speed reference of the mechanical system of the power generator in order to extract or deposit energy from the electrical output power of the converter device. Therefore, the electrical output power is modulated to damp the power oscillations.

The technical problem of the invention is to provide a method as well as a wind farm for an improved damping of electromechanical oscillations on the power grid. The problem is solved with the method according to claim 1 and a wind farm according to claim 12.

According to the invention a method of damping electromechanical oscillations on a power system is provided. The damping in form of attenuation takes place by injecting reactive power generated by one or more wind energy turbines to the power system. A reactive power controller is adapted to determine a reference reactive power value depending on an actual system voltage. The actual system voltage is e.g. measured close to a connecting point of the wind energy turbines. One important aspect of the reactive power controller is to stabilize the system voltage by injection reactive power. The method according to the invention comprises measuring oscillation data associated with the power system. The oscillation data contain information such as amplitudes and frequencies in the power system. One of the method steps refers to filtering the measured oscillation data to remove a steady state offset, e.g. all frequencies outside a frequency interval of electromechanical oscillations. The filtered oscillation data contain the alternating signal of the data. The filtered oscillation data are further processed to compensate electromechanical oscillations. According to the invention a gain provided to a reference reactive power value by the reactive power controller in response to electromechanical oscillations is compensated and also used to generate corrected oscillation data. Furthermore, a delay of the reference reactive power value by the reactive power controller is used to generate the corrected oscillation data. When considering the gain provided by the reactive power controller it should be kept in mind, that the reference reactive power value oscillates if there are oscillations in the system voltage. The gain of the reactive power controller depends on the grid voltage. The delay of the reference reactive power value comprises all delays e.g. delays caused by communication times, cycle times and dynamics in the overall control loop.

Based on the corrected oscillation data a reactive power setpoint for the power system is determined based on the reference reactive power value and the corrected oscillation data. The method provides damping within a desired frequency range, set by the filtering step, and is continuously activated. During normal operation, the influence of the damping is quasi eliminated or strongly minimized. The inventive method does not require activation or deactivation procedures. The claimed method adds stability to the power grid by ensuring a desired phase shift in the reactive power support when electromechanical oscillations are visible in the measured system voltage. Oscillations in the measured voltage lead to oscillations in the reference reactive power value. The corrected oscillation data together with the reference reactive power value provide a reactive power setpoint having a damping effect on the electromechanical oscillations.

According to the invention one or more wind energy turbines inject reactive power to the power system. A conventional approach to damping oscillations is modulating the electrical torque of the generator in the wind energy turbine. This step results in modulating the active power output of the generator. In sharp contrast hereto the invention achieves attenuation and damping of the electromechanical oscillations by defining a reactive power setpoint having a damping effect on the power system.

In a preferred embodiment the measured oscillation data correspond to the actual system voltage. The oscillations in the actual system voltage cause oscillations in the reference reactive power value. Gaining and shifting the filtered system voltage allows to generate a corrected oscillation data to determine a reactive power setpoint for effective damping of electromechanical oscillations on the power system.

In a further preferred embodiment the filtering of the measured oscillation data is a high-pass filtering and preferably a band-pass filtering to eliminate a steady state offset. The filtering step removes all frequencies above or outside a range of frequencies in the range of electromechanical oscillations. The band-pass filtering can also be understood as a band-stop filtering, wherein all frequencies outside a defined frequency band are stopped. The preferred band-pass filtering is used to eliminate influences of the damping on higher frequency content in the oscillatory input.

In a preferred embodiment of the invention an adaptive gain is provided to the filtered oscillation data. The adaptive gain is selected so as to compensate non-linear effects of the reactive power control. Non-linear effects of the system, e.g. large differences in the system response over the full operating range can be compensated with the help of adaptive gain.

In a preferred embodiment the filtered oscillation data are shifted based on a lead-lag compensation. The lead-lag compensation serves as a compensation of the delay caused by communication times, cycle times and dynamics in the overall control loop. This compensation element must ensure that reactive power is injected within a desired phase angle with respect to the oscillatory input. One lead element can achieve up to 90° of phase shift, higher phase shifts are achieved by coupling two or more blocks of lead elements in series.

In a preferred embodiment a switchable power oscillation damping is additionally provided. The switchable power oscillation damping is switched off during normal operations and switched on if

(i) a frequency of a measured oscillation data falling within a predetermined frequency interval and/or
(ii) an amplitude of the measured oscillation data exceeding a predetermined threshold value.

It is possible to use the additional power oscillation damping, if the frequency falls within a predetermined frequency interval. For electromechanical oscillation the preferred frequency interval lies between 0.2 Hz and 1.5 Hz. Depending on the power grid the frequency interval can be limited to 0.5 Hz and 1.1 Hz. Even a limitation down to 0.6 Hz and 1 Hz is possible. The switchable power oscillation can be switched on if frequency and amplitude both meet the defined requirements or if only one of the criteria is met. The frequency interval used to switch the additional damping on can also be used as filter interval for the filtering step according to the invention. For the purpose of clarity it shall be noted that the terms "falls within" or "falling within" are referring to a quantity determined as being within a certain frequency interval.

A suitable damping for the switchable power oscillation damping uses a $2^{nd}$ order-lag element (PT2-element) which is adapted to compensate a gain applied by the reactive power controller to a reference reactive power value ($Q_{ref}$) in response to electromechanical oscillations on the power system and a delay in the reference reactive power value ($Q_{ref}$) caused by the reactive power controller. Again, damping relies on measured oscillation data. Gain and phase of the oscillation data are

compensated with the 2nd order-lag element (PT2-element).

In a preferred embodiment measured oscillation data are applied to the 2nd order-lag element (PT2-element). The measured oscillation data are either filtered grid voltage values or filtered reactive power values.

The underlying problem of the invention is also solved by a wind farm according to claim 12.

The invention refers to a wind farm connected to a power system. The wind farm comprising a plurality of wind energy turbines and a wind farm controller arranged to provide active and reactive power setpoints to each of the wind energy turbines. Each wind energy turbine comprises a power generator driven by a wind rotor and a converter adapted to provide active power and reactive power to the power system. Furthermore, a measuring device for measuring oscillation data associated with a power system is comprised within the wind farm. The wind farm controller comprises a filter unit adapted to remove a steady state offset from the measured oscillation data. The filter unit can be a software part of the reactive power sontroller or a separate hardware element. A reactive power controller provides a reference reactive power value ($Q_{ref}$) depending on an actual system voltage. The reference reactive power value is controlled to stabilize the power voltage on the power system.

A power oscillation damping device (POD-device) is adapted to compensate a gain provided to the reference reactive power value caused by the reactive power controller in response to electromechanical oscillations, and a delay of the reference reactive power value caused by the reactive power controller. The POD-device generates corrected oscillation data. The delay corresponds to a phase shift in the oscillation data. The wind farm controller is adapted to continuously output a reactive power setpoint to at least one of the plurality of wind energy turbines. The reactive power setpoint is based on the reference reactive power value and the corrected oscillation data of the POD-device. An important aspect for the inventive wind farm that the damping of the electromechanical oscillations is provided by injecting reactive power to the power system.

In a preferred embodiment the wind farm comprises an additional POD-device which is switchable. The additional POD-device is switched off during normal operations and switched on if a frequency of measured oscillation data falls within a predetermined frequency interval and/or an amplitude of the measured oscillation data exceeds a predetermined threshold value.

The switchable POD-device relies either on the measured actual system voltage or on a measured actual reactive power of the power grid. Contrary to the continuously operated POD-device the switchable POD-device processes the reference reactive power value generated by the reactive power controller.

The invention is described in detail with reference to the following Figures:

Fig. 1     shows simulation results with voltage and reactive power at a coupling point of a wind energy turbine to a power system showing electromechanical oscillations without any damping,

Fig. 2     shows the wind energy turbine control loop for the voltage,

Fig. 3     shows the integration of two power oscillation damping (POD)-devices integral into a wind farm controller,

Fig. 4     shows a switchable POD-device integrated into a wind farm controller,

Fig. 5     shows a block diagram for a switchable POD-device,

Fig. 6     shows a second POD-device based on damping the measured system voltage,

Fig. 7     shows a simulation and measurement results for both POD-devices, and

Fig. 8     shows the effect of a POD-device on the system voltage.

Electromechanical oscillations limit the transmission capacity when the electrical distance from a production surplus area to the main load center is significant. Electromechanical oscillations occur when the rotor angle of a synchronous machine starts swinging after a disturbance in the power system. If damping is insufficient, the angular swinging is possible leading to a loss of stability, system separation and in the worst case a large scale blackout.

Modern wind power plants do not directly participate to the classical rotor angle swinging that occurs during the electromechanical oscillations. However, wind power affects the damping of electromechanical oscillations, because the rotor of a modern wind energy turbine is synchronously decoupled from the system.

Depending on the system and its ability to damp electromechanical oscillations a situation may occur in which the integration of a wind farm with standard control settings leads to an undamped power system oscillation. It even may occur that oscillations are amplified by using the standard controller.

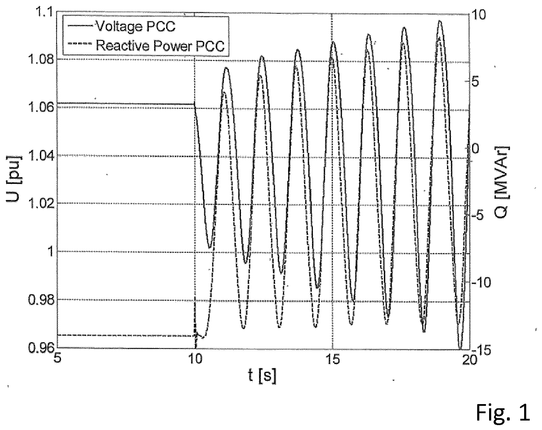

Fig. 1 shows a simulation, in which at the point of common coupling (PCC) the voltage and the reactive power of a wind energy turbine using standard control settings leads to an amplified oscillation. Reactive power is almost in phase with system voltage, amplifying the voltage oscillations and consequently the electromechanical oscillations. Such a situation and its analysis is not standardly covered by the controller design and tuning; the voltage controller is primarily designed to fulfil the reactive power dynamics following voltage variations, obtaining damping for electromechanical oscillations is rather exceptionally addressed. The results in Fig. 1 emphasize the need to ensure that the wind energy turbine does not amplify occurring power system oscillations.

The amplifying behavior shown in Fig. 1 is turned into a decrease of the oscillations by a proper phase shift of the reactive power to the voltage. The original phase shift is the result of various delays and dynamics in the overall reactive power control loop. The design of the activated control mode in which the reactive power is a function of the voltage (Q = f(U)) incorporates the effect of these delays and dynamics properly to fulfil the required reactive power dynamics i.e. reaching 90 % of the setpoint value within 1.0 second. These controller settings however lead to an undesirable reactive power response to voltage oscillations between 0.6 Hz and 1.0 Hz. For a proper damping it is necessary to combine the damping of electromechanical oscillations with the required reactive power dynamics.

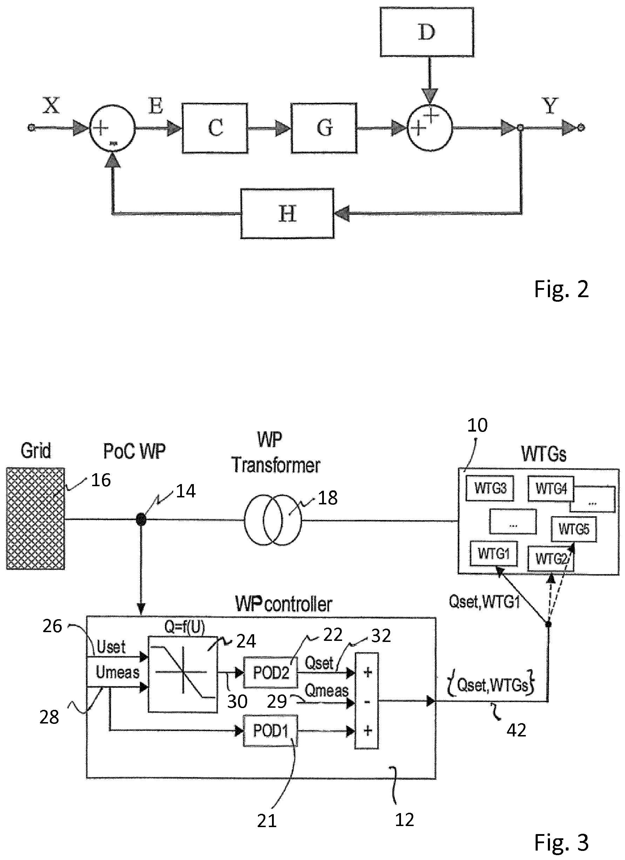

A suitable approach can be best understood by using a transfer function analysis of the control loop. Fig. 2 shows the control loop with X as the voltage setpoint, C the wind energy turbine, G the system, and H the measurement. Using the transfer function approach leads to the following dependency of the output signal Y from both input signals, the voltage setpoint X and the disturbance D:

$$Y = \frac{CG}{1+CGH}X + \frac{1}{1+CGH}D.$$

The second part of the equation determines to which extent the disturbances D are suppressed or amplified by the wind energy turbine. For the attenuation of electromechanical oscillations it is therefore necessary that the amplitude of 1/(1+CGH) has a negative amplitude in the frequency range of interest and simultaneously ensures a desired step response with a sufficient phase margin to avoid controller instability.

An additional aspect for the electromechanical power oscillations is to ensure the above mentioned dynamic requirements at varying short-circuit power values at the point of coupling. The short-circuit power does not directly influence the set phase shift, though the controller dynamics slightly change. A lower short-circuit power causes higher voltage deviations in the system for the same reactive power injection, the phase margin of the controller is typically reduced, making the controller more sensitive.

Fig. 3 shows schematically an approach for damping of electromechanical oscillations using a wind farm controller. Fig. 3 shows a wind farm 10 with a plurality of wind energy turbines WTG1 - WTG5. The wind farm 10 is controlled by a wind farm controller 12. The wind farm controller 12 provides a sum of reactive power setpoints ($Q_{set,WTGs}$) 42 for the wind energy turbines in the wind farm 10. The sum of reactive power setpoints 42 is split up into individual reactive power setpoints, for each wind energy turbine in the wind farm 10. The wind farm controller 12 is connected to the point of common coupling 14 of the wind farm 10. The wind farm 10 is connected to the power system 16 via a wind farm transformer 18.

In order to understand the different approaches of the POD1-device 21 and the POD2-device 22 it is helpful to consider the reactive power controller 24 first. The reactive power controller 24 receives a constant voltage setpoint $U_{set}$ 26 and a measured voltage value $U_{meas}$ 28. If the measured voltage value $U_{meas}$ 28 deviates from the constant voltage setpoint $U_{set}$ 26 the reactive power controller 24 supplies a reference reactive power value $Q_{ref}$ 30. The main function of the reference reactive power value $Q_{ref}$ 30 is to stabilize the power system voltage.

The POD2-device 22 is a switchable device and operates using the reference reactive power value $Q_{ref}$ 30 as input. The POD2-device 22 outputs a reactive power setpoint $Q_{set}$ 32. A measured reactive power $Q_{meas}$ 29 is subtracted from the reactive power set point 32 in order to provide the sum of reactive power setpoints $Q_{set,\ WTGs}$ 42 for the wind energy turbines of the wind farm.

The POD1-device 21 operates based on the measured system voltage $U_{meas}$ 28. The output of the POD1-device 21 is the sum of setpoint reactive power setpoints ($Q_{set,\ WTGs}$) 42 for the wind energy turbines WTG1-5 of the wind farm 10.

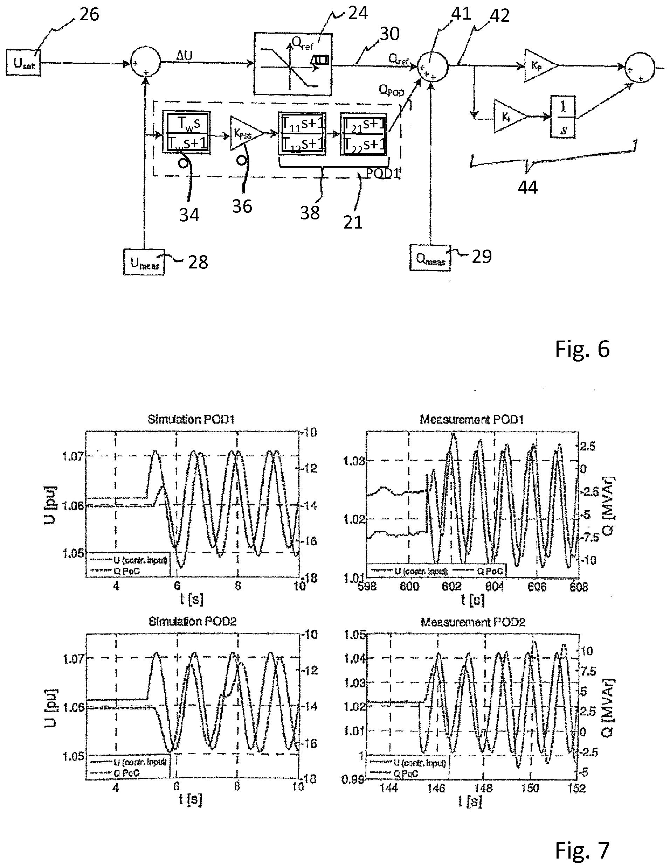

The function of the POD1-device 21 is explained in detail with reference to Fig. 6. Fig. 6 shows a constant voltage setpoint $U_{set}$ 26 and the measured system voltage $U_{meas}$ 28. The POD1-device 21 receives the measured system voltage $U_{meas}$ 28 as input. The POD1-device 21 consists of a filter 34, a gain 36 and a lead-lag compensation 38.

The filter 34 is adapted as a high-pass filter to eliminate a steady state offset of the POD control loop on the overall response. Moreover, low frequency signals are blocked by the filter. Only signals above a defined frequency are passed to be damped. Alternatively, a band pass filter can be used to also eliminate influences of the damping on the higher frequency content in the oscillatory input.

The gain 36 determines the amount of damping introduced. The gain must be high enough to provide a sufficient damping (if for instance the Q(U)-path does not provide the desired phase shift, the POD-path should be dominant) and sufficiently low to avoid unstable behavior of the overall controller. Thereto, the balance of gains between the control path without POD and the POD-path needs to be well tuned.

It is also possible to include adaptive gain schedule techniques to compensate non-linear effects of the system, e.g. large differences in the systems response over the full operation range.

The lead-lag compensation 38 serves as a compensation of the delay caused by the cycle times and dynamics in the overall control loop. This compensation element must ensure that reactive power is injected with a desired phase angle with respect to the oscillatory input.

An output reactive power $Q_{POD}$ 40 of the POD1-device 21, the measured reactive power $Q_{meas}$ 29 together with the reference reactive power $Q_{ref}$ 30 as output by the reactive power controller 24 are used to determine a control reactive power setpoint 42. Preferable a summation element 41 sums up the values determined as the control reactive power setpoint 42. The control reactive power setpoint 42 is applied to a PI-controller 44 and split up into one or more setpoints for different wind energy turbines.

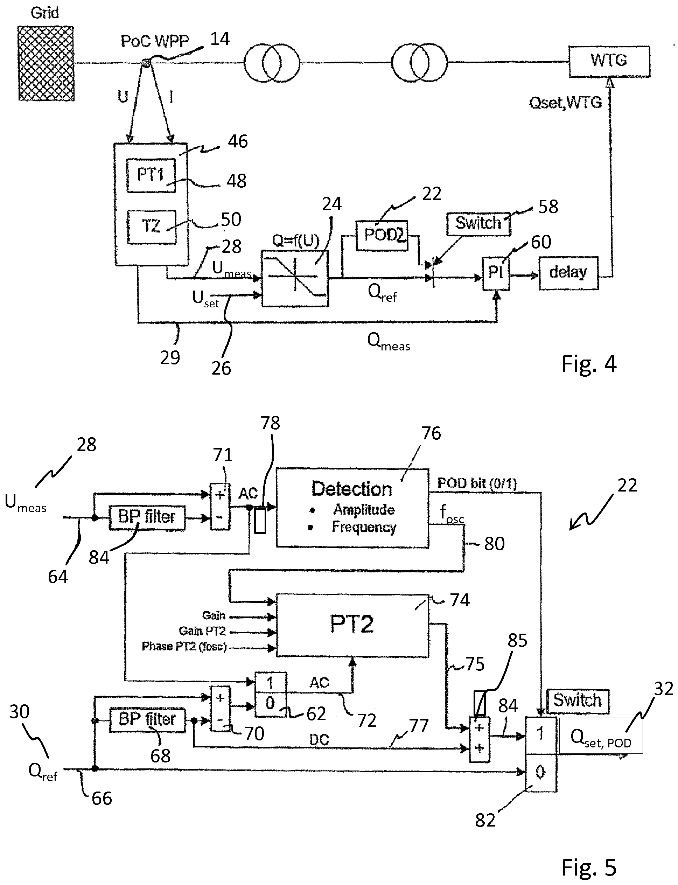

The function of the POD2-device 22 is shown in Figures 4 and 5. Fig. 4 shows in a schematical view the measurement device 46 which provides a measured voltage value $U_{meas}$ 28 and a measured reactive power value $Q_{meas}$ 29 by measuring the a voltage U and a current I close the point of common coupling 14. The dynamical behavior of the measuring device 46 can be described by using a PT1-element 48 and a dead time element 50. The PT1-element 48 corresponds to a $1^{st}$-order lag element. The measured voltage value $U_{meas}$ 28 together with the voltage setpoint $U_{set}$ 26 are applied to the reactive power controller 24. The reactive power controller 24 outputs a reference reactive power $Q_{ref}$ 30 which is applied to a PI-controller 60 together with the measured reactive power value $Q_{meas}$ 29 bypassing the reactive power controller 24 and the switch unit 58. The switch unit can be a hardware switch or a software switch.

During normal operation a switch unit 58 provides the reference reactive power $Q_{ref}$ 30 to the PI-controller 60. If a frequency value and an amplitude value of the measured voltage $U_{meas}$ 28 indicate electromechanical oscillations on the power system, the switch unit 58 disconnects the reference reactive power $Q_{ref}$ 30 from the PI-controller 60 and connects the POD2-device 22 with its output value to the PI-controller 60. The switching is triggered if a detection element 76 (cp. Fig. 5) detects electromechanical oscillations on the power system.

Fig. 5 explains the function of the POD2-device 22 in detail. As indicated by an additional switch unit 62 the POD2-device 22 can be configured to use either the measured voltage $U_{meas}$ 28 at an input 64 or the reference reactive power $Q_{ref}$ 30 at an alternative input 66.

In a first step the use of the reference reactive power $Q_{ref}$ 30 at the alternative input 66 is described. The reference reactive power $Q_{ref}$ 30 is applied to a band pass filter 68. The band pass filter 68 may also be considered as a band-stop filter which blocks frequencies within its band(s). The difference of the output of the band pass filter 68 and the reference reactive power $Q_{ref}$ 30 constitutes an AC signal 72. Together with the original reference reactive power $Q_{ref}$ The difference as provided by a subtractor 70 is applied to a $2^{nd}$ order lag-element (PT2-element) 74. For processing the reference reactive power $Q_{ref}$ 30 as input the switch unit 62 is set to 0.

The detection of electromechanical oscillations is carried out by the detection element 76. Based on an AC signal 78 which is the output of a subtractor 71 subtracting the measured system voltage $U_{meas}$ 28 and a band pass filtered signal 84. The detection element 76 determines whether the AC signal 78 of the measured voltage $U_{meas}$ 28 falls within a frequency interval of electromechanical oscillations. The frequency interval is usually between 0.2 Hz and 1.5 Hz. The detection element 76 also determines whether the amplitude of the AC signal 78 exceeds a predefined threshold value. The frequency value of the AC signal 78 is output as oscillation frequency $f_{osc}$ 80 and applied to the $2^{nd}$ order-lag element 74 (PT2-element). If the detection element 76 detects electromechanical oscillations a POD-bit is set and processed in the switch 82. If the POD bit is set the switch 82 switches to its on state (1) and forwards reactive power $Q_{set,POD}$ 32 based on the output 84 of a summation element 85. The PT2-element 74 uses a PT2-gain and a PT2-phase and the detected frequency $f_{osc}$ 80 in order to provide a phasing to the AC signal 72 of the reference reactive power $Q_{ref}$ 30 for damping. The output 75 of the $2^{nd}$ order-lag element 74 is added to the DC signal 77 as provided by the band pass filter 68 using a summation element 85.

If the switch unit 62 is switched to 0, the AC signal 72 applied to the PT2-element 74 is based on the reference reactive power $Q_{ref}$ 30. However, the AC signal 78 is still used to detect electromechanical oscillations. The reference reactive power $Q_{ref}$ 30 as applied to the input 66 is forwarded to a band pass filter 68 which works as band-stop filter to provide a DC-signal 77. A subtractor 70 subtracts the DC signal 77 from the original signal of the reference reactive power $Q_{ref}$ 30 to provide the AC signal 72, which is applied to the $2^{nd}$ order lag element 74.

Fig. 7 shows simulation results and measurement results for the voltage and the reactive power for a POD1-device 21 and a POD2-device 22. For the POD2-device 22 it is within the reactive power signal Q visible that the POD2-device 22 is triggered at the time of about 7.5 seconds. For the measured values of the reactive power the POD2-device 22 is triggered at about 148 seconds.

The characteristics of POD1-device and the POD2-device can be summarized as follows:

In the continuous approach of the POD1-device the continuous activation ensures an adequate phase shift between voltage and reactive power at the point of coupling, also during power system oscillations with low amplitude. A clean control approach with immediate damping as soon as first oscillation swings occur is used. No oscillation detection is needed. This contributes to a high reliability and a low susceptibility to failure. The switchable approach of the POD2-device can be summarized as avoiding interference with controller dynamics during normal operation. The POD2-device is only actuated when power system oscillations are detected. The POD2-device settings can be set without influencing the step response dynamics of the system. System interactions are avoided during normal operation. Oscillation detecting makes the POD2-event possible.

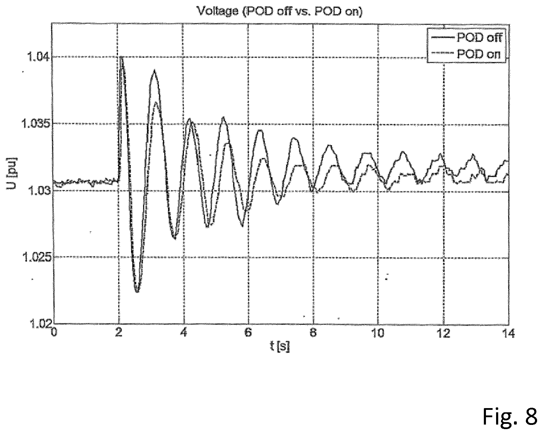

Fig. 8 shows the voltage behavior with a power oscillation damping on versus power oscillations damping off. As can be seen clearly from Fig. 8, the voltage oscillation with POD1 are stronger damped than without the POD.

List of reference numerals

| | |
|---|---|
| 10 | Wind farm |
| WTG 1-5 | Wind energy turbine |
| 12 | Wind farm controller |
| 16 | Power system |
| 18 | Wind farm transformer |
| 21 | POD1-device |
| 22 | POD2-device |
| 24 | Reactive power controller |
| 26 | Constant voltage setpoint |
| 28 | Measured voltage value |
| 29 | Measured reactive power value |
| 30 | Reference reactive power |
| 32 | Reactive power setpoint |
| 40 | Output reactive power $Q_{POD}$ |
| 42 | Sum of reactive power setpoint $Q_{set,WTGs}$ |
| 46 | Measurement device |
| 48 | PT1-device |
| 58 | Switch unit |
| 60 | PI-controller |
| 62 | Additional switch unit |
| 64 | Input |
| 66 | Alternative input |
| 68 | Band pass filter |
| 70 | Subtractor |
| 71 | Subtractor |
| 72 | AC signal |
| 74 | 2nd order lag-element /PT2-element |
| 76 | Detection element |
| 78 | AC signal |
| 80 | Oscillation frequency $f_{osc}$ |
| 82 | Switch |
| 84 | Band pass filtered signal |
| 85 | Summation element |

**Claims**

1. Method of damping electromechanical oscillations on a power system by injecting reactive power generated by one or more wind energy turbines, wherein a reactive power controller is adapted to determine a reference reactive power value ($Q_{ref}$) depending on an actual system voltage ($U_{meas}$), the method comprising:

   - measuring oscillation data associated with the power system,
   - filtering the measured oscillation data to remove a steady state offset,
   - applying a gain and a phase shift to the filtered oscillation data to compensate

      o a gain in the reference reactive power value ($Q_{ref}$) caused by the reactive power controller in response to the electromechanical oscillations, and
      o a delay in the reference reactive power value ($Q_{ref}$) caused by the reactive power controller, and to generate corrected oscillation data, and

   - determining a reactive power setpoint ($Q_{set}$) to be injected into the power system by the one or more wind energy turbines based on the reference reactive power value ($Q_{ref}$) and the corrected oscillation data, wherein the damping is continuously applied to the oscillation data.

2. Method according to claim 1, wherein the measured oscillation data correspond to the actual system voltage ($U_{meas}$).

3. Method according to claim 1 or 2, wherein the step of filtering the measured oscillation data includes a high-pass filtering.

4. Method according to claim 1 or 2, wherein the step of filtering the measured oscillation data is band-pass filtering in order to remove a steady state offset. P

5. Method according to one of the preceding claims, wherein an adaptive gain is applied to the filtered oscillation data, said adaptive gain being selected so as to compensate non-linear effects of the reactive power controller.

6. Method according to one for the preceding claims, wherein the filtered oscillation data are shifted in dependence of a lead-lag compensation.

7. Method according to one of the preceding claims, wherein a switchable power oscillating damping is additionally provided, which is switched off during normal operations and switched on based on at least one of the following criteria:

   i. a frequency of the measured oscillation data falling within a predetermined frequency interval and

ii. an amplitude of the measured oscillation data exceeding a predetermined threshold value.

8. Method according to claim 7, wherein the predetermined frequency interval lies between 0.2 Hz and 1.5 Hz, preferably between 0.5 Hz and 1.1 Hz, and more preferably between 0.6 Hz and 1 Hz.

9. Method according to claim 7 or 8, wherein the measured oscillation data are applied to a $2^{nd}$ order-lag element (PT2-element) adapted to compensate

- a gain applied by the reactive power controller to the reference reactive power value ($Q_{ref}$) in response to electromechanical oscillations, and
- a delay in the reference reactive power value ($Q_{ref}$) caused by the reactive power controller.

10. Method according to claim 9, wherein the measured oscillation data are applied to the $2^{nd}$ order-lag element (PT2-element) are either filtered grid voltage values or filtered reactive power values.

11. Method according to claim 9 or 10, wherein the filtered oscillation data are band-pass filtered in order to eliminate a steady state offset.

12. A wind farm connected to a power system, the wind farm comprising a plurality of wind energy turbines, a wind farm controller arranged for providing active and reactive power setpoints to each of the plurality of wind energy turbines, and a measurement device for measuring oscillation data associated with the power system, wherein the wind farm controller comprises:

- a filter unit for removing a steady state offset from the measured oscillation data,
- a reactive power controller arranged for providing a reference reactive power value ($Q_{ref}$) depending on an actual system voltage ($U_{meas}$),
- a power oscillation damping device (POD-device) adapted to compensate

o a gain in the reference reactive power value ($Q_{ref}$) caused by the reactive power controller in response to electromechanical oscillations, and
o a delay in the reference reactive power value ($Q_{ref}$ ) caused by the reactive power controller, and to generate corrected oscillation data,

- wherein the wind farm controller is adapted to continuously output a reactive power setpoint ($Q_{set}$) to at least one of the plurality of wind energy turbines based on the reference reactive power value ($Q_{ref}$) and the corrected oscillation data generated by the POD-device.

13. The wind farm according to claim 12, adapted for damping electromechanical oscillations on the power system according to one of the preceding method claims 1 to 11.

Fig. 1

Fig. 2

Fig. 3

Fig. 4

Fig. 5

Fig. 6

Fig. 7

Fig. 8

Europäisches
Patentamt

European
Patent Office

Office européen
des brevets

**EUROPEAN SEARCH REPORT**

Application Number

EP 16 19 8707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/109447 A1 (ACHILLES ALFREDO S [AR] ET AL) 6 May 2010 (2010-05-06) * paragraphs [0008], [0013], [0014], [0043], [0044]; claims 1, 15; figures 3, 4 * ----- | 1-6,8-13 | INV. H02J3/24 |

TECHNICAL FIELDS
SEARCHED (IPC)

H02J

The present search report has been drawn up for all claims

| Place of search | Date of completion of the search | Examiner |
|---|---|---|
| Munich | 21 April 2017 | Meyer, Andreas Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 19 8707

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2017

| Patent document cited in search report | Publication date | Patent family member(s) | | Publication date |
|---|---|---|---|---|
| US 2010109447 A1 | 06-05-2010 | CN | 101725480 A | 09-06-2010 |
| | | DK | 2182207 T3 | 10-02-2014 |
| | | EP | 2182207 A2 | 05-05-2010 |
| | | ES | 2447569 T3 | 12-03-2014 |
| | | US | 2010109447 A1 | 06-05-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013004252 A2
- EP 2499714 A2
- US 8618694 B2
- EP 2516164 A2
- US 20160141991 A1
- EP 2594004 B1